(19) Europäisches Patentamt
European Patent Office
Office européen des brevets

(11) Publication number: **0 322 166 B1**

(12) **EUROPEAN PATENT SPECIFICATION**

(45) Date of publication of patent specification: **15.04.92**

(51) Int. Cl.$^5$: **C07C 69/54**, C08K 5/13, C08L 9/00

(21) Application number: **88311973.7**

(22) Date of filing: **16.12.88**

(54) **Phenolic compound and its use as a stabilizer for butadiene polymer.**

(30) Priority: **23.12.87 JP 327731/87**

(43) Date of publication of application:
**28.06.89 Bulletin 89/26**

(45) Publication of the grant of the patent:
**15.04.92 Bulletin 92/16**

(84) Designated Contracting States:
**CH DE FR GB IT LI NL**

(56) References cited:
**EP-A- 0 210 046**
**EP-A- 0 251 724**

**CHEMICAL PATENTS INDEX, BASIC ABSTRACTS JOURNAL, section A, week 8745, 13th January 1988, A0388, no. 87-316509/45, Derwent Publications Ltd, London, GB; & JP-A-62 223 248**

(73) Proprietor: **SUMITOMO CHEMICAL COMPANY, LIMITED**
**Kitahama 4-chome 5-33**
**Chuo-ku Osaka 541(JP)**

(72) Inventor: **Sasaki, Manji**
**2-1 Kuwatacho**
**Ibaraki-shi(JP)**
Inventor: **Yachigo, Shinichi**
**10-5-406 Sonehigashinocho-2-chome**
**Toyonaka-shi(JP)**
Inventor: **Inoue, Kikumitsu**
**8-3 Hamakoshien-3-chome**
**Nishinomiya-shi(JP)**
Inventor: **Tanaka, Shinya**
**14-7 Mefu-2-chome**
**Takarazuka-shi(JP)**
Inventor: **Takata, Takeshi**
**4-2 Ryodocho**
**Nishinomiya-shi(JP)**

(74) Representative: **Ablewhite, Alan James et al**
**MARKS & CLERK 57/60 Lincoln's Inn Fields**
**London WC2A 3LS(GB)**

**EP 0 322 166 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a phenolic compound having good solubility in solvents, and its use as a stabilizer for butadiene polymers.

Butadiene polymers such as solution polymerized polybutadiene rubber (BR), solution polymerized styrene-butadiene copolymer rubber (SBR) and styrene-butadiene block copolymer (SBS) are generally produced by anionic polymerization in a hydrocarbon solvent using a Ziegler catalyst or an organolithium compound as a catalyst. Removal of the solvent from a polymer solution after completion of polymerization has hitherto been performed by a steam-stripping method, but recently, a method of directly removing the solvent which can theoretically minimize the amount of steam required has been proposed for saving of energy.

However, the latter process is normally carried out at a high temperature of about 150-200 °C which is considerably higher than the boiling point of polymerization solvents. Therefore, this method suffers from the problems such as gel formation and discoloration of polymers after the high temperature process. Such being the case, there has been desired to improve resistance to thermal degradation and discoloration in the preparation of butadiene polymers, especially in the absence of oxygen.

Furthermore, in extrusion molding or injection molding of SBS or high-impact polystyrenes modified with BR, SBR or SBS, high temperature and high speed processing is required and owing to insufficient thermal resistance, fish eye gel often occurs to cause the problems such as deterioration of film properties and discoloration of the film. Thus, solution of these problems has been earnestly demanded.

It has been well known to use various antioxidants of phenol type, phosphorus type and sulfur type during preparation and processing of butadiene polymers. For example, phenolic antioxidants such as 2,6-di-t-butyl-4-methylphenol, 2,2′-methylenebis(6-t-butyl-4-methylphenol), n-octadecyl 3-(3,5-di-t-butyl-4-hydroxyphenyl)propionate, triethylene glycol bis[3-(3-t-butyl-4-hydroxy-5-methylphenyl)propionate], pentaerythrityl tetrakis[3-(3,5-di-t-butyl-4-hydroxyphenyl)propionate] and 1,3,5-trimethyl-2,4,6-tris-(3,5-di-t-butyl-4-hydroxybenzyl)benzene are used alone or in combination with phosphorus type antioxidants such as tris-(nonylphenyl) phosphite and distearly pentaerythrityl diphosphite or in combination with sulfur type antioxidants such as dilauryl thiodipropionate, dimyristyl thiodipropionate, distearyl thiodipropionate and pentaerythrityl tetrakis(3-laurylthiopropionate).

However, these methods are not sufficient to prevent thermal deterioration (gelation) which may occur, especially in the absence of oxygen, at a high temperature process for separation of the polymer from a polymer solution in the preparation of butadiene polymers or at high temperature processing of butadiene polymers.

Further, a phenolic compound represented by the following formula (I) has been known as a stabilizer for butadiene polymers.

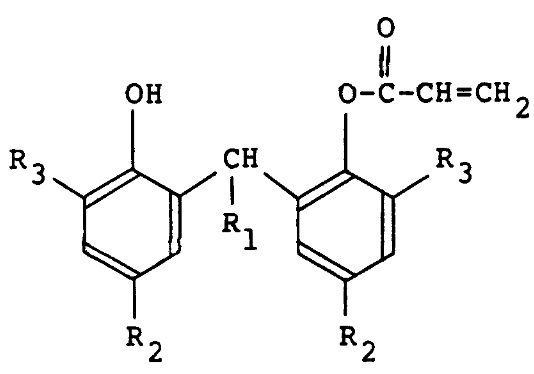

(I)

For example, U.S. Patent No. 4,525,514 discloses a compound of the above formula (I) where $R_1$ is hydrogen, $R_2$ is an alkyl of 1-4 carbon atoms and $R_3$ is t-butyl. It mentions that particularly, the compound where $R_2$ is methyl, namely, 2-t-butyl-6-(3-t-butyl-2-hydroxy-5-methylbenzyl)-4-methylphenyl acrylate is effective as a stabilizer for butadiene polymers. This stabilizer exhibits the effect to prevent thermal deterioration (gelation), especially in the absence of oxygen, at a high temperature process for separation of the polymer from a polymer solution in the preparation of butadiene polymers or at high temperature processing of butadiene polymers, but it has become apparent that the use of this stabilizer has the problem in that the separated polymer is practically insufficient in its hue.

Further, this 2-t-butyl-6-(3-t-butyl-2-hydroxy-5-methylbenzyl)-4-methylphenyl acrylate has very low solubility in hydrocarbon solvents used in the production of butadiene polymers. Normally, when such stabilizer is added at the production of butadiene polymers, a solution of the stabilizer in a hydrocarbon solvent is added to a polymer solution. Therefore, if the solubility of the stabilizer in the solvent is low, the stabilizer solution becomes slurry to cause clogging in piping and a large investment is necessary to avoid this problem.

Moreover, as an antioxidant for various synthetic resins for preventing discoloration caused by oxidative deterioration in the presence of oxygen, U.S. Patent No. 4,365,032 has proposed a monoester compound of 2,2′-alkylidenebis(4,6-di-alkyl substituted phenol) including the acrylate represented by the above mentioned formula (I). This patent specifies $R_1$ in the formula (I) to be hydrogen or an alkyl of 1-10 carbon atoms and $R_2$ and $R_3$ to be an alkyl of 1-4 carbon atoms, a cycloalkyl of 5-6 carbon atoms or a methyl-substituted cycloalkyl of 5-6 carbon atoms. However, this patent makes no mention of preventing discoloration or thermal deterioration (gelation) which may occur, especially in the absence of oxygen, at a high temperature process for separating a polymer from a polymer solution in the production of butadiene polymers or at high temperature processing of butadiene polymers. Besides, the compounds specifically exemplified in the patent showed no sufficient effect to prevent thermal deterioration or discoloration, especially in the absence of oxygen, at a high temperature process in the production of butadiene polymers or at high temperature processing of butadiene polymers.

Furthermore, Japanese Patent Kokai No. 62-223248 discloses to stabilize polyethylene by combination use of the phenolic compound of the formula (I) with other phenolic compound and/or a phosphorus-containing compound. This patent publication merely mentions stabilization of polyethylene and makes no teaching to stabilize butadiene polymers, especially to prevent the thermal deterioration (gelation) or discoloration in the absence of oxygen.

Further, this patent publication generically defines $R_1$ in the formula (I) to be hydrogen or methyl and $R_2$ and $R_3$ to be hydrogen or an alkyl of 1-8 carbon atoms. Some of the compounds exemplified in the patent publication are effective for stabilization of butadiene polymers, especially, for prevention of thermal deterioration or discoloration in the absence of oxygen, but none of them have good solubility in hydrocarbon solvents used in the production of butadiene polymers.

## SUMMARY OF THE INVENTION

An object of the present invention is to provide a compound which can prevent thermal deterioration (gelation) or discoloration of butadiene polymers, especially in the absence of oxygen, at a high temperature process for separating a polymer from a polymer solution in the production of butadiene polymers or at high temperature processing of butadiene polymers and besides has good solubility in hydrocarbon solvents used in the production of butadiene polymers.

Another object of the present invention is to stabilize butadiene polymers using such compound.

As a result of the inventors' research, they have found that a phenolic compound of a specific structure satisfies the above objects, that is, such compound has good solubility in hydrocarbon solvents and hence can be easily added in the production of butadiene polymers and besides, butadiene polymers containing this compound are stable against thermal deterioration (gelation) or discoloration in the absence of oxygen at a high temperature process in the production thereof and at high temperature processing of the polymers. The present invention has been accomplished based on these findings.

## DESCRIPTION OF THE INVENTION

Thus, the present invention provides a phenolic compound represented by the formula (II):

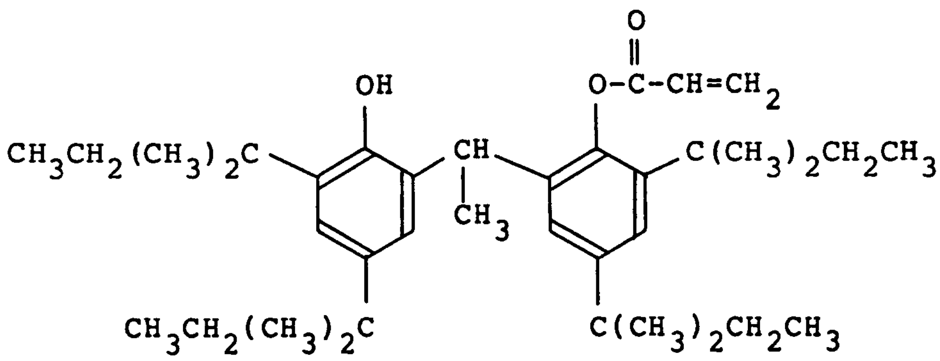

(II)

The present invention also concerns a stabilizer for butadiene polymers comprising the compound of the formula (II), a method for stabilizing butadiene polymers by incorporating the compound of the formula (II), and a butadiene polymer composition containing the compound of the formula (II).

The phenolic compound represented by the formula (II) is included in the genus of the formula (I) or close to the phenolic compounds disclosed in the above mentioned prior art, but specifically has never been known. According to the present invention, it has been found that a specific compound, namely, the compound of the formula (II) among the phenolic compounds of the formula (I) has conspicuously superior properties to the known compounds.

The substituent $R_1$ in the phenolic compounds of the formula (I) is preferably as small as possible in carbon number of alkyl for preventing gelation of butadiene polymers at a high temperature and methyl is most preferred. For $R_2$, a group represented by $-C(CH_3)_2-R'$ containing a quaternary carbon atom is preferred for preventing discoloration of butadiene polymers and especially preferred are t-butyl, t-amyl and t-octyl. As $R_3$, preferred is a group represented by $-C(CH_3)_2-R'$ containing a quaternary carbon atom for preventing gelation of butadiene polymers at a high temperature and especially preferred are t-butyl and t-amyl.

It has been further found that a phenolic compound of the formula (II) which corresponds to that of the formula (I) where $R_1$ is methyl and $R_2$ and $R_3$ are t-amyl has peculiarly very high solubility in hydrocarbon solvents as shown in the following Table 1.

Table 1

Solubility at 20°C (g/100 g solvent)

| Solvent / Compound* | n-Hexane | Cyclohexane |
|---|---|---|
| (II) | 55 | 89 |
| AO-1 | 1.5 | 4.0 |
| AO-2 | 1.1 | 2.4 |

*AO-1: Compound of the formula (I) where $R_1$= H, $R_2=CH_3$, $R_3=C(CH_3)_3$.

AO-2: Compound of the formula (I) where $R_1=CH_3$, $R_2=R_3=C(CH_3)_3$.

Names of the compounds are shown in Table 3.

Thus, it will be recognized that only the phenolic compound represented by the formula (II) of the present invention satisfies all requirements to prevent gelation and discoloration of butadiene polymers at a high temperature and to have high solubility in hydrocarbon solvents.

The phenolic compound of the formula (II) of the present invention can be produced by esterification reaction of 2,2′-ethylidenebis(4,6-di-t-amylphenol) with acrylic acid or its derivative such as acryloyl chloride, acryloyl bromide or acrylic anhydride (See U.S. Patent Nos. 4,525,514, 4,562,281 and 4,365,032).

When the phenolic compound of the formula (II) is used as a stabilizer for butadiene polymers, such butadiene polymers include, for example, solution polymerized polybutadiene rubber (BR), solution polymerized styrene-butadiene copolymer rubber (SBR), styrene-butadiene block copolymer (SBS) and high-impact polystyrenes (HI-PS) modified with BR, SBR or SBS. These may be used alone or in combination with other polymers.

Amount of the phenolic compound to be incorporated into the butadiene polymer is 0.05-2 parts by weight, preferably 0.1-1 part by weight per 100 parts by weight of the butadiene polymer. When the amount of the phenolic compound is less than 0.05 part by weight, the desired effect is insufficient and even if it exceeds 2 parts by weight, the corresponding effect cannot be exhibited and this is not economical.

Since the phenolic compound of the present invention has very high solubility in hydrocarbon solvents used as polymerization solvents for butadiene polymers, the compound can be added, as a solution in said polymerization solvent, to the polymerized reaction solution of a butadiene polymer after termination of anionic polymerization reaction. Alternatively, the phenolic compound may be added to the polymer by dry blending at the time of processing such as extrusion molding, injection molding.

According to the present invention, a butadiene polymer composition having excellent properties can be obtained by incorporating the above mentioned phenolic compound as a stabilizer into a butadiene polymer and, if necessary, there may be further added other phenolic compounds and/or other additives such as ultraviolet absorbers, light stabilizers, antioxidants, metal deactivators, metallic soaps, nucleating agents, lubricants, antistatic agents, fire retardants, pigments and fillers.

Examples of these additives are as follows.

Phenolic antioxidants:

2,6-Di-t-butyl-4-methylphenol,
n-Octadecyl 3-(3,5-di-t-butyl-4-hydroxyphenyl)propionate,
Triethylene glycol bis[3-(3-t-butyl-4-hydroxy-5-methylphenyl)propionate],
Pentaerythrityl tetrakis[3-(3,5-di-t-butyl-4-hydroxyphenyl)propionate],
1,3,5-Trimethyl-2,4,6-tris(3,5-di-t-butyl-4-hydroxybenzyl)benzene,
3,9-Bis{2-[3-(3-t-butyl-4-hydroxy-5-methylphenyl)propionyloxy]-1,1-dimethylethyl}-2,4,8,10-tetraoxaspiro-[5•5]undecane.

Ultraviolet absorbers:

2-Hydroxy-4-methoxybenzophenone,
2-Hydroxy-4-n-octoxybenzophenone,
2-(2-Hydroxy-5-methylphenyl)benzotriazole,
2-(3-t-Butyl-2-hydroxy-5-methylphenyl)-5-chlorobenzotriazole,
2-(3,5-Di-t-butyl-2-hydroxyphenyl)-5-chlorobenzotriazole,
2-(3,5-Di-t-amyl-2-hydroxyphenyl)benzotriazole,
2,4-Di-t-butylphenyl 3,5-di-t-butyl-4-hydroxybenzoate,
[2,2′-Thiobis(4-t-octylphenolate)]/n-butylamine Ni salt.

Hindered amine light stabilizers:

2,2,6,6-Tetramethyl-4-piperidyl benzoate,
Bis(2,2,6,6-tetramethyl-4-piperidyl) sebacate,
Bis(1,2,2,6,6-pentamethyl-4-piperidyl) 2-(3,5-di-t-butyl-4-hydroxybenzyl)-2-n-butylmalonate,
4-[3-(3,5-Di-t-butyl-4-hydroxyphenyl)propionyloxy]-1-[2-{3-(3,5-di-t-butyl-4-hydroxyphenyl)-propionyloxy}ethyl]-2,2,6,6-tetramethylpiperidine,
Polycondensate of dimethyl succinate and 4-hydroxy-1-(2-hydroxyethyl)-2,2,6,6-tetramethylpiperidine,
Poly{[6-(1,1,3,3-tetramethylbutyl)amino-1,3,5-triazine-2,4-diyl][(2,2,6,6-tetramethyl-4-piperidyl)-imino]-

hexamethylene[(2,2,6,6-tetramethyl-4-piperidyl)imino]},
Poly{[6-morpholino-1,3,5-triazine-2,4-diyl][(2,2,6,6-tetramethyl-4-piperidyl)imino]hexamethylene[(2,2,6,6-tetramethyl-4-piperidyl)imino]},
2-Methyl-2-(2,2,6,6-tetramethyl-4-piperidyl)amino-N-(2,2,6,6-tetramethyl-4-piperidyl)propionamide.

Sulfur-containing antioxidants:

Dilauryl thiodipropionate,
Dimyristyl thiodipropionate,
Distearyl thiodipropionate,
Pentaerythrityl tetrakis(3-dodecylthiopropionate),
3,9-Bis(2-dodecylthioethyl)-2,4,8,10-tetraoxaspiro[5•5]undecane.

Phosphorus-containing antioxidants:

Distearyl pentaerythrityl diphosphite,
Tris(2,4-di-t-butylphenyl) phosphite,
Tris(2-t-butyl-4-methylphenyl) phosphite,
Bis(2,4-di-t-butylphenyl) pentaerythrityl diphosphite,
Tetrakis(2,4-di-t-butylphenyl) 4,4′-biphenylene diphosphonite,
Bis(2,6-di-t-butyl-4-methylphenyl) pentaerythrityl diphosphite.

A stabilizer for butadiene polymers which contains the phenolic compound of the formula (II) as an active ingredient may comprise this compound alone or may comprise a mixture of the compound with a carrier which does not affect the properties of the butadiene polymers or may further comprise a mixture of the compound with at least one of the above mentioned additives. Further, it may, of course, comprise a solution of the compound in a hydrocarbon solvent as mentioned before.

The phenolic compound as specified in the present invention is effective, when incorporated into butadiene polymers, to prevent gelation and discoloration caused by thermal deterioration especially in the absence of oxygen. Accordingly, a butadiene polymer free from gelation and discoloration can be stably obtained when the polymer is separated from a polymer solution at a high temperature after termination of polymerization reaction. Furthermore, butadiene polymers containing the phenolic compound are also stable against thermal deterioration at processing steps such as injection molding and extrusion molding. For example, formation of fish eye gel at a film forming step or formation of microgel which may cause reduction of gloss or reduction of transparency at an injection molding step can be prevented to give products of high quality free from discoloration.

In addition, the phenolic compound of the present invention has very high solubility in hydrocarbon solvents and hence can be added easily to a butadiene polymer solution after the termination of polymerization reaction as a solution in a solvent. Thus, operability is very good and conventionally used apparatuses for production can be used without any modification.

The present invention will be explained in more detail with reference to a preparation example of the phenolic compound of the present invention, examples of using the phenolic compound in butadiene polymers and comparative examples of using known compounds which are similar to the phenolic compound of the present invention. However, the present invention should never be limited to these examples.

Preparation Example 1

In a 2 liter four necked flask equipped with a thermometer, a stirrer, a condenser and a dropping funnel were charged 494.8 g (1.0 mol) of 2,2′-ethylidenebis(4,6-di-t-amylphenol), 72.1 g (1.0 mol) of acrylic acid, 400 g of n-heptane and 212.5 g (2.1 mol) of triethylamine. Under a nitrogen atmosphere, 107.3 g (0.7 mol) of phosphorus oxychloride was added dropwise with stirring. After completion of the addition, the flask was kept at 80 ° C for 1 hour and then 500 g of water was added and stirred with the reaction mixture at 60 ° C followed by separation into layers.

The separated oil layer was repeatedly washed with water until the aqueous layer became nearly neutral and then the oil layer was cooled to 5 ° C with stirring to precipitate crystals. Stirring was further continued at the same temperature for sufficient precipitation. The crystals were collected by filtration, washed with cold n-heptane and dried under reduced pressure to obtain 210.7 g of white crystalline 2,4-di-t-amyl-6-[1-(3,5-di-t-amyl-2-hydroxyphenyl)ethyl]phenyl acrylate (II). m.p. 120-121.5 ° C.

Elemental analysis:

| Found | (Calcd.) |
|---|---|
| C: 80.94% | (80.98%) |
| H: 10.26% | (10.28%) |

Mass analysis (FD-MS):

M/Z 548 ($M^+$)

Examples 1 and 2

Polymerization of 1,3-butadiene was effected at 60-65 °C using n-butyl lithium as a catalyst in n-hexane under a nitrogen atmosphere. After termination of the polymerization with isopropyl alcohol as a terminator, was added thereto a n-hexane solution of 2,4-di-t-amyl-6-[1-(3,5-di-t-amyl-2-hydroxyphenyl)ethyl]phenyl acrylate (II) and then, n-hexane was removed by flash distillation at 190-200 °C under the nitrogen atmosphere to obtain a polybutadiene rubber composition (BR). Loading amount of 2,4-di-t-amyl-6-[1-(3,5-di-t-amyl-2-hydroxyphenyl)ethyl]phenyl acrylate (II) is shown in Table 2 with a unit of part by weight per 100 parts by weight of the polybutadiene.

The resulting polybutadiene rubber composition was subjected to a kneading test under the following conditions in a nitrogen stream using Laboplastmill (model 40-100 manufactured by Toyo Seiki Co.). Gelation preventing effect at the kneading was evaluated with torque behavior contingent to gelation. The results are shown in Table 2. The effect to prevent the gelation is shown by a gelation time required to reach a peak value of the torque and the longer time means the higher effect to prevent the gelation.

[Conditions of the test using Laboplastmill]

| | |
|---|---|
| (1) Mixer | Model R-60 |
| (2) Range of torque measured | 0-500 kg-cm |
| (3) Amount of charged composition | 30 g |
| (4) Flow rate of nitrogen gas | 1 l/min |
| (5) Test temperature | 180 °C |
| (6) Revolution | 10 rpm during preheating for 3 min; thereafter 60 rpm. |

Furthermore, degree of discoloration of the polybutadiene rubber after the high temperature process for preparation thereof was evaluated by the naked eye and shown in Table 2 by the following criteria.

O: No discoloration
Δ: Discoloration in light yellow
X: Discoloration in yellow

Comparative Examples 1-9

Experiments were effected in the same manner as in the above Examples 1 and 2 except that test compounds as shown in Table 3 were used in place of 2,4-di-t-amyl-6-[1-(3,5-di-t-amyl-2-hydroxyphenyl)-ethyl]phenyl acrylate (II) and preventive effect of the test compounds against gelation and discoloration of the polybutadiene rubber were evaluated. The results and loading amount of the test compounds are shown in Table 2.

Table 2

| Test compound \ No. | | Examples | | Comparative Examples | | | | | | | | |
|---|---|---|---|---|---|---|---|---|---|---|---|---|
| | | 1 | 2 | 1 | 2 | 3 | 4 | 5 | 6 | 7 | 8 | 9 |
| Loading amount | (II) | 0.2 | 0.4 | | | | | | | | | None |
| | AO-1 | | | 0.4 | 0.8 | | | | | | | |
| | AO-2 | | | | | 0.2 | 0.4 | | | | | |
| | AO-3 | | | | | | | 0.4 | 0.8 | | | |
| | AO-4 | | | | | | | | | 0.4 | 0.8 | |
| Gelation time (min.) | | 47 | 71 | 31 | 42 | 45 | 67 | 10 | 14 | 8 | 13 | 5 |
| Degree of discoloration | | ○ | ○ | Δ | X | ○ | ○ | ○ | Δ | ○ | ○ | X |

Table 3

| Symbol | Name of compound |
|---|---|
| AO-1 | 2-t-Butyl-6-(3-t-butyl-2-hydroxy-5-methylbenzyl)-4-methylphenyl acrylate |
| AO-2 | 2,4-Di-t-butyl-6-[1-(3,5-di-t-butyl-2-hydroxyphenyl)ethyl]phenyl acrylate |
| AO-3 | 2,6-Di-t-butyl-4-methylphenol |
| AO-4 | n-Octadecyl 3-(3,5-di-t-butyl-4-hydroxyphenyl)propionate |

Examples 3 and 4

Under a nitrogen atmosphere, 0.8 part by weight of n-butyl lithium was added to a cyclohexane solution containing 20 parts by weight of 1,3-butadiene and reaction was allowed to proceed at 70°C for 1 hour. Thereafter, to the reaction product were added in sequence 20 parts by weight of styrene, 15 parts by weight of 1,3-butadiene and 45 parts by weight of styrene and polymerization was effected at 70°C for 1 hour, respectively. After termination of the polymerization, to the reaction product was added a cyclohexane solution of 2,4-di-t-amyl-6-[1-(3,5-di-t-amyl-2-hydroxyphenyl)ethyl]phenyl acrylate (II) and cyclohexane was removed by heating under the nitrogen atmosphere to obtain a block copolymer composition of B-A-B-A structure containing 35% by weight of butadiene. Loading amount of the test compound is shown in Table 4 with a unit of part by weight per 100 parts by weight of the block copolymer.

The resulting block copolymer compositions were subjected to a strand fall extrusion test under the following conditions using Laboplastmill extruder and the evaluation was conducted by measuring gel content in the stranded product as a toluene-insoluble fraction. The gel content was determined by dipping about 1 g of the accurately weighed stranded product sample in 200 ml of toluene, stirring it for 24 hours, then collecting it by filtration using a 200 mesh wire gauze, drying unfiltered matter, weighing it as the gel and calculating the gel content from the weight. The results are shown in Table 4.

[Test conditions]

(1) Testing machine: Laboplastmill Model 40-100 (Toyo Seiki Co.)
(2) Extruder: Model D20-25 (Toyo Seiki Co.)
(3) Diameter of strand die: 0.5 mmØ
(4) Cylinder temperature: 230-260°C
(5) Revolution: 3 rpm
(6) Distance of fall: 93 cm

Further, degree of discoloration of the stranded sample obtained by the high temperature processing of the styrene-butadiene block copolymer composition was visually evaluated and indicated by the following marks in Table 4.

O: No discoloration
Δ: Discoloration in light yellow
X: Discoloration in yellow

Comparative Examples 10-18

Experiments were effected in the same manner as in the above Examples 3 and 4 except that test compounds as shown in Table 3 were used in place of 2,4-di-t-amyl-6-[1-(3,5-di-t-amyl-2-hydroxyphenyl)-ethyl]phenyl acrylate (II) and preventive effect of the test compounds against gelation and discoloration were evaluated. The results and loading amount of the test compounds are shown in Table 4.

Table 4

| Test compound / No. | | Examples 3 | Examples 4 | Comparative Examples 10 | 11 | 12 | 13 | 14 | 15 | 16 | 17 | 18 |
|---|---|---|---|---|---|---|---|---|---|---|---|---|
| Loading amount | (II) | 0.2 | 0.4 | | | | | | | | | None |
| | AO-1 | | | 0.4 | 0.8 | | | | | | | |
| | AO-2 | | | | | 0.2 | 0.4 | | | | | |
| | AO-3 | | | | | | | 0.4 | 0.8 | | | |
| | AO-4 | | | | | | | | | 0.4 | 0.8 | |
| Gel content (%) | | 0.0 | 0.0 | 0.7 | 0.4 | 0.0 | 0.0 | 7 | 5 | 10 | 7 | 82 |
| Degree of discoloration | | ○ | ○ | Δ | x | ○ | ○ | ○ | Δ | ○ | ○ | x |

## Claims

**1.** A phenolic compound represented by the formula of

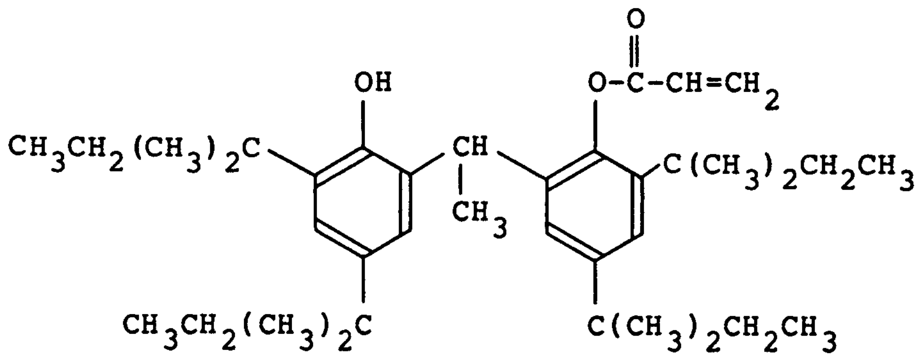

2. A stabilizer for butadiene polymer comprising a phenolic compound of claim 1.

3. The stabilizer according to claim 2, wherein the phenolic compound is dissolved in a hydrocarbon solvent.

4. A method for stabilizing a butadiene polymer which comprises incorporating a phenolic compound of claim 1 into the butadiene polymer.

5. The method according to claim 4, wherein the butadiene polymer is prepared by anionic polymerization, and the phenolic compound is added to a polymerized reaction solution after the anionic polymerization is terminated.

6. A butadiene polymer composition comprising a butadiene polymer and a phenolic compound of claim 1.

7. The butadiene polymer composition according to claim 6, wherein the butadiene polymer is solution polymerized polybutadiene rubber, solution polymerized styrene-butadiene copolymer rubber or styrene-butadiene block copolymer.

8. The butadiene polymer composition according to claim 6, wherein the phenolic compound is present in an amount of 0.05 to 2 parts by weight per 100 parts by weight of the butadiene polymer.

9. The butadiene polymer composition according to claim 8, wherein the amount of the phenolic compound is 0.1 to 1 part by weight per 100 parts by weight of the butadiene polymer.

**Revendications**

1. Composé phénolique représenté par la formule

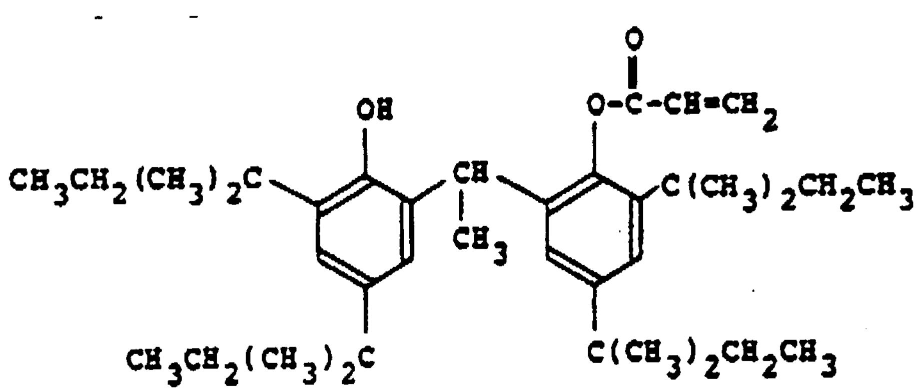

2. Stabilisant pour polymère de butadiène comprenant le composé phénolique de la revendication 1.

3. Stabilisant selon la revendication 2, dans lequel le composé phénolique est dissous dans un solvant hydrocarboné.

4. Procédé de stabilisation d'un polymère de butadiène, qui consiste à incorporer le composé phénolique de la revendication 1 dans le polymère de butadiène.

5. Procédé selon la revendication 4, dans lequel le polymère de butadiène est préparé par polymérisation anionique et le composé phénolique est ajouté à une solution réactionnelle polymérisée une fois la polymérisation anionique terminée.

6. Composition de polymère de butadiène comprenant un polymère de butadiène et le composé phénolique de la revendication 1.

7. Composition de polymère de butadiène selon la revendication 1, dans laquelle le polymère de butadiène est un caoutchouc de polybutadiène polymérisé en solution, un caoutchouc de copolymère styrène/butadiène polymérisé en solution ou un copolymère séquencé styrène/butadiène.

8. Composition de polymère de butadiène selon la revendication 6, dans laquelle le composé phénolique est présent en une quantité de 0,05 à 2 parties en poids pour 100 parties en poids du polymère de butadiène.

9. Composition de polymère de butadiène selon la revendication 8, dans laquelle la quantité du composé phénolique est de 0,1 à 1 partie en poids pour 100 parties en poids du polymère de butadiène.

**Patentansprüche**

1. Phenolische Verbindung der Formel:

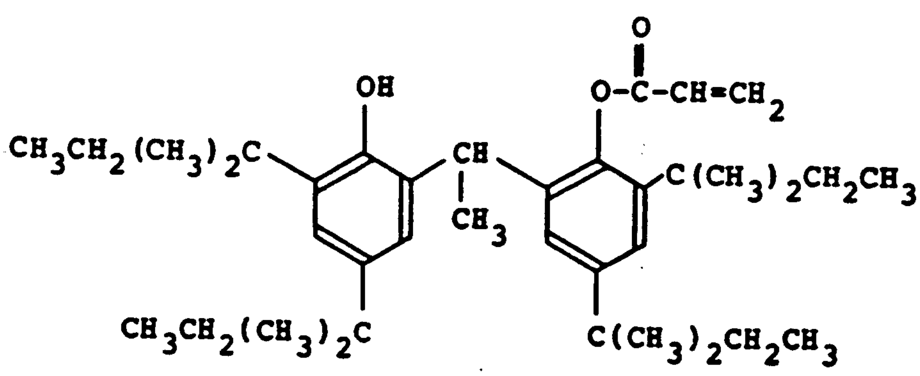

2. Stabilisator für Butadienpolymere, umfassend eine phenolische Verbindung nach Anspruch 1.

3. Stabilisator nach Anspruch 2, dadurch gekennzeichnet, daß die phenolische Verbindung in einem Kohlenwasserstofflösungsmittel gelöst ist.

4. Verfahren zum Stabilisieren eines Butadienpolymeren durch Einarbeiten einer phenolischen Verbindung nach Anspruch 1 in das Butadienpolymere.

5. Verfahren nach Anspruch 4, dadurch gekennzeichnet, daß das Butadienpolymere durch anionische Polymerisation hergestellt wurde und daß die phenolische Verbindung einer polymerisierten Reaktionslösung nach beendeter anionischer Polymerisation zugesetzt wird.

6. Butadienpolymerisatmasse, enthaltend ein Butadienpolymeres und eine phenolische Verbindung nach

Anspruch 1.

7. Butadienpolymerisatmasse nach Anspruch 6, dadurch gekennzeichnet, daß es sich bei dem Butadienpolymeren um einen lösungspolymerisierten Polybutadienkautschuk, einen lösungspolymerisierten Styrol-Butadien-Copolymerisatkautschuk oder ein Styrol-Butadien-Blockcopolymeres handelt.

8. Butadienpolymerisatmasse nach Anspruch 6, dadurch gekennzeichnet, daß die phenolische Verbindung in einer Menge von 0,05 - 2 Gew.-Teil(en) pro 100 Gew.-Teile des Butadienpolymeren vorhanden ist.

9. Butadienpolymerisatmasse nach Anspruch 8, dadurch gekennzeichnet, daß die Menge an der phenolischen Verbindung 0,1 - 1 Gew.-Teil pro 100 Gew.-Teile des Butadienpolymeren beträgt.